# EUROPEAN PATENT APPLICATION

(11) **EP 3 716 197 A1**
(43) Date of publication of application: **30.09.2020**
(21) Application number: 19166423.4
(22) Date of filing: 29.03.2019
(51) Int. Cl.: G06Q 50/30, G06Q 10/08, G06Q 30/08, G07B 15/00

(54) **A METHOD FOR TRANSPORTING A PLURALITY OF SYSTEM USERS AND GOODS**

(71) Applicant: ERTICO SCRL, 1050 Brussel (BE); Nimera BVBA, 1850 Grimbergen (BE); Edelwise BVBA, 3220 Holsbeek (BE)
(72) Inventor: DAEMS, Frank, 3220 Holsbeek (BE); VERMASSEN, Erwin, 1850 Grimbergen (BE)
(74) Representative: IPLodge bv

(57) **Abstract**

The invention relates to a method of using a first computing device in a system for transporting a plurality of system users and goods by use of a plurality of autonomous vehicles, the method comprising operating a first module to receive from one of said plurality of system users and goods, a request for a transport service performed by at least one of said plurality of autonomous vehicles; emitting a request signal to a set of autonomous vehicles of said plurality of autonomous vehicles; operating a second module, at the expiry of a first predetermined time frame to analyse any answer signal received from at least one of said set of autonomous vehicles within said first time frame ti, to select a transport service proposed by one of said set of autonomous vehicles, and to emit a confirmation signal to said autonomous vehicle selected for delivering said transport service.

## Description

### Field of the Invention

The present invention relates to a system for transporting a plurality of system users and goods by use of a plurality of autonomous vehicles. The invention also relates to a corresponding method for use in same.

### Background

Currently, many countries and regions with a high population density are increasingly being confronted with traffic jams as well as pollution associated therewith. However, it has been found that utilization rates for individual vehicles of the vehicle fleet causing such traffic jams are traditionally quite low. It is believed that better vehicle utilization rates would ultimately lead to a smaller vehicle fleet and hence less and smaller traffic jams, which would in turn have a positive effect on the environment.
Parallel to these developments, autonomous vehicle technology has taken a big leap forward in recent years. It is believed that the underlying algorithms are getting to the point where they are robust enough to guide passengers through traffic without any human intervention needed or even possible. It is thereby expected that a general rollout of such vehicles will lead to safer traffic.

Several initiatives are known wherein driverless vehicles are being used for performing the duties of a taxi, thus increasing the utilization rate of the vehicle. For example, taxi services by a driverless car are offered by companies such as Waymo. Typically for such services is that a customer is provided with a mobile application for booking a ride from one location to a destination location.

However, such approaches from different competing companies may leave customers with the burden of comparing multiple offers from several companies where immediate transport is required. Furthermore, some of these initiatives can only rely on a network of own vehicles which have been thoroughly adapted following the specific requirements of that single company offering transport services.

There is therefore a need for a system allowing to transport a plurality of persons and goods to be transported over a network of roads by a plurality of autonomous vehicles, which system should be compatible with the transport services of different companies. It is thereby preferable that such a system can be applied to both newly manufactured autonomous vehicles as well as autonomous vehicles already in use. Furthermore, such a system should allow both the customer as the vehicle an optimal freedom to act in the process.

### Summary of the Invention

According to an aspect of the present invention, there is provided a method of using a first computing device in a system for transporting a plurality of system users and goods by use of a plurality of autonomous vehicles, the method comprising at said first computing device:
- Operating a first module to receive, by use of a first interface, from one of said plurality of system users and goods, a request for a transport service to be performed by at least one of said plurality of autonomous vehicles to a destination location;
- Emitting a request signal comprising said request to a set of autonomous vehicles of said plurality of autonomous vehicles;
- Operating a second module, at the expiry of a first predetermined time frame t₁, starting from emitting said request signal, to
   - analyse any answer signal received from at least one of said set of autonomous vehicles within said first time frame t₁;
      and, if from said analysis emerges that said any answer signal comprises a transport service offer, to
   - select a transport service proposed by one of said set of autonomous vehicles; and to
   - emit a confirmation signal to said autonomous vehicle selected for delivering said transport service.

It is an advantage of embodiments of the present invention that a system user can use a computing device to submit requests for a transport service. Such a service may e.g. be offered by a company disposing of a fleet of vehicles and/or by individual single vehicles. By use of an interface of the computing device, the system user may submit his or her request with a plurality of vehicles capable of delivering such a service while operating within a framework of preferences predefined by the system user. It is a further advantage that the first computing device is configured to analyse answer signals, typically on the basis of preferences already defined by the system user, and to select from any incoming transport service offers a transport service proposed by a vehicle. The first computing device may also select a transport service offer from a plurality of transport service offers and propose this to the system user for confirmation.

In an embodiment of the method according to the present invention, the first interface is configured to receive a request for a transport service by use of a mobile device screen, and/or the first interface is further configured to display at least the selected transport service, by use of said mobile device screen.

It is an advantage of this embodiment that a mobile device is used so that the system user can call on a transport service regardless his location. Furthermore, by using the mobile device screen, the system user can define his or her request for transport as well as evaluate any incoming transport service offers and select a transport service therefrom.

In an embodiment of the method according to the present invention, the creation of said set of autonomous vehicles is determined on the basis of geographical proximity of vehicles to a certain location, such as the location of one of said plurality of system users and goods.

It is an advantage of this embodiment that offers for a transport service will only be received from relevant vehicles. Vehicles that are considered too far away will either not be contacted or will automatically disregard such requests. As such, the time for a vehicle to arrive at a pick-up location will advantageously be reduced to a minimum.

In an embodiment of the method according to the present invention, the first module is configured to suggest and/or initiate autonomously a request for a transport service by use of machine learning techniques.

It is an advantage of this embodiment that a system user does not have to spend time defining his or her request for transport. The first module can be trained to recognize situations wherein the system user may need transport services.

In an embodiment of the method according to the present invention, the second module is configured to select autonomously a transport service proposed by at least one of said set of autonomous vehicles by use of machine learning techniques.

It is an advantage of this embodiment that a system user does not have to spend time evaluating a plurality of transport service offers. The second module can be trained to select a transport service offer which pleases the system user most on the basis of earlier experiences and criteria.

In an embodiment of the method according to the present invention, the second module emits a rejection signal to any vehicle of said at least one of said set of autonomous vehicles, under the condition that said any vehicle was not selected for delivering said transport service.

It is an advantage of this embodiment that vehicles do not have to wait until the end of a time interval t₄ before they can participate in a bid for another transport request and submit a transport service offer.

In an embodiment of the method according to the present invention, the confirmation signal or rejection signal are emitted within a second predetermined time frame t₂, starting from operating said second module.

It is an advantage of this embodiment that the duration of t₂ is shorter than the duration of t₄, so that a vehicle does not have to wait for the expiration of t₄ to participate in another bid.

According to an aspect of the present invention, there is provided a method of using a second computing device in a system for transporting a plurality of system users and goods by use of a plurality of autonomous vehicles, the method comprising at said second computing device:
- Receiving, from a first computing device, a request signal relating to a request for a transport service to a destination location;
- Operating a third module to
   - inspect said request signal on the basis of predetermined elementary rules with the aim of formulating a bid to said request in the form of a transport service offer, or to refuse said request;
   - communicate to said particular first computing device an answer signal comprising said refusal or said transport service offer, within a third predetermined time frame t₃ starting from the receival of said particular request signal;
   and, if said answer signal comprises a transport service offer,
   - awaiting a confirmation signal for the duration of a fourth predetermined time frame t₄ starting from the communication of said particular answer signal.

It is an advantage of embodiments of the present invention that any vehicle from a plurality of autonomous vehicles can use a computing device for receiving requests for a transport service from a plurality of system users and goods. Advantageously, said vehicle can operate a third module to inspect all incoming requests and either formulate an offer or a refusal to said request for a transport service. The vehicle thereby has the power to make this choice independently.

In an embodiment of the method according to the present invention, under the condition that an answer signal has been sent comprising a transport service offer, and for the duration of said fourth predetermined time frame t₄, no answer signals comprising a transport service offer are emitted in reply to request signals received from other first computing devices.

It is an advantage of this embodiment that situations are avoided wherein a vehicle commits to two transport services which are not mutually compatible. By treating such requests for a transport service sequentially, it will be clear for the system user that a transport service offer is reliable for a duration t₄.

In an embodiment of the method according to the present invention, the third module is further configured to formulate said bid to said request, by use of machine learning techniques.

It is an advantage of this embodiment that a vehicle has the power and authority to set its own prices when participating in a bid for a transportation service, thereby giving each vehicle the opportunity of optimising its income by altering its prices.

In an embodiment of the method according to the present invention, wherein the method further comprises at said second computing device the step of contacting one of a plurality of autonomous vehicles.

It is an advantage of this embodiment that a transport service can be shared between more than one vehicle, thus reducing the chance that a request for transport service involving a large distance will not be ignored by all potential vehicles.

According to an aspect of the present invention, there is provided a system for transporting a plurality of system users and goods by use of a plurality of autonomous vehicles, comprising one or more first computing devices for use in the method described above and one or more second computing devices for use in the method described above.

It is an advantage of embodiments of the present invention that each of said plurality of system users and goods can be provided with a first computing device and each of said plurality of autonomous vehicles can be provided with a second computing device.

In an embodiment of the system according to the present invention, the first and second computing devices are configured to communicate signals by use of the TPEG protocol.

It is an advantage of this embodiment that a protocol is used that allows bi-directional communication between the vehicles and systems users and goods. Said TPEG protocol may thereby make use of transmission media such as 4G, 5G or DAB+.

According to an aspect of the present invention, there is provided a computer program product comprising code means configured to cause a processor to perform the functions of said first computing device in the method as described here above.

According to an aspect of the present invention, there is provided a computer program product comprising code means configured to cause a processor to perform the functions of said second computing device in the method as described here above.

The technical effects and advantages of embodiments of the computer program product and the system according to the present invention correspond *mutatis mutandis* to those of the corresponding embodiments of the system according to the invention.

### Brief Description of the Figures

These and other features and advantages of embodiments of the present invention will now be described in more detail with reference to the accompanying drawings, in which:
- Figure 1 schematically illustrates a system for transporting a plurality of system users and goods by use of a plurality of autonomous vehicles according to an embodiment of the invention;
- Figure 2 schematically illustrates the selection of vehicles of a plurality of autonomous vehicles into a set of autonomous vehicles.

### Detailed Description of Embodiments

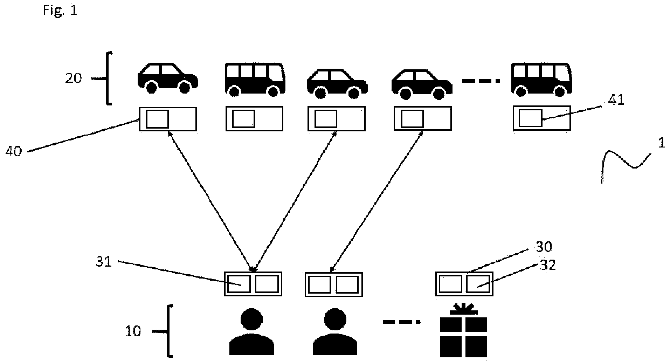

Figure 1 schematically illustrates a system 1 for transporting a plurality of system users and goods 10 by use of a plurality of autonomous vehicles 20 according to an embodiment of the invention. Typically, a member of said plurality of system users and goods 10, also referred herein to as a system user, will be a person or a group of persons, or a physical parcel for shipment.
For the purpose of the invention, the term "autonomous vehicle" - sometimes referred to as "self-driving vehicle" or "driverless vehicle" - refers to a vehicle that can guide itself without human conduction. In particular, such a vehicle uses a variety of sensors to assess the direct environment in order to move with little or no human input. The Society of Automotive Engineers (SAE) defined six levels of automation, with a higher number referring to an increased degree in automation. The term autonomous vehicle refers herein to vehicles preferably having a level of automation (SAE level) of at least 4.

A specific application of the system 1 according to embodiments of the invention is related to the transport of people and physical parcels on a network of roads to a plurality of destinations by use of a fleet of autonomous vehicles. For this purpose, the system has a distributed, or peer-to-peer, architecture. Advantageously, the peer-to-peer architecture offers system users and goods an increased security as, due to the absence of a centralized server, it is not obvious to find out which vehicle is being used by a certain individual, thereby protecting customer privacy. While presenting the system user with a great freedom of choice, the autonomous vehicles are preferably provided with a high degree of autonomy regarding the choice of participating in a bid for a request for transport by a system user, as well as price setting, while taking into account practical matters such as available range due to battery charge or rest fuel.
The autonomous vehicle has the liberty to set and adapt prices of its own motion. The user has the freedom to select a transport provider of his or her own choice or leave this choice to an autonomously operating device.

According to embodiments of the invention, each of said plurality of system users and goods 10 is provided with a first computing device 30. A system user may use the first computing device 30 for requesting and selecting a transport service from a first location being the pick-up location, which may be the location of the system user, to a second location, being the destination location.

According to embodiments of the invention, said first computing device 30 is a mobile device of the system user. As used herein, the term "mobile device" generally refers to any computing device that is made for portability. Mobile devices include a laptop computer, a mobile phone, a personal digital assistant (PDA), a data tablet, a digital camera, a video camera, and the like. For the purpose of transporting goods, said mobile device may refer to a chip attached to said goods.

The first computing device 30 is provided to operate a first module 31.
Said first module 31 is configured to receive from a system user a request for a transport service from a first destination to a destination location. Said request is to be performed by at least one of said plurality of autonomous vehicles 20.
Typically, said request is received by use of a first interface (not shown on the figure). For the purpose of the invention, the term "interface" refers to a means permitting communication between the system user and components of the system 1. According to preferred embodiments of the invention, said first interface is configured to receive a request for a transport service by use of a display of said first computing device 30, more in particular the display of a mobile device.

Typically said request comprises information regarding at least the pick-up location, which may be different from the actual location of the system user, and the destination location and may as well contain one or more elements which have to be fulfilled by a vehicle of the plurality 20 as a condition for said vehicle to process the request and return to the system user with an offer for a transport service. Said one or more elements comprise:
- a maximum price for the service, which may e.g. be indicated as a maximum price per kilometre;
- an upper limit for the time a vehicle may need to arrive at the pick-up location;
- a maximum travel time;
- a description of the number of people or quantity of goods (e.g. in volume and/or weight) that the vehicle needs to transport;
- any limitations on parallel services that the vehicle may be executing for other system users;
- information regarding a possible stopover;
- any preference regarding additional facilities in the vehicle, such as the presence of toilets, sleeping and/or working facilities, food and the like;
- a minimum user rating for the vehicle;
- the presence of any entertainment services in the vehicle;
- a minimum degree of cleanliness, a proof of which may be requested by e.g. the provision of a picture showing the interior of the vehicle in real time.
Said request may further define a time limit or predetermined time frame t₁ during which the request is valid. Any transport service offers received after said time frame t₁ expires will not be evaluated. Said time frame t₁ will start at the moment the request signal is emitted to a set of autonomous vehicles. Said time limit will be at most five minutes, preferably at most four minutes, more preferably at most three minutes, even more preferably at most two minutes, and most preferably at most one minute. Typically, said time frame t₁ will be in the order of a few seconds. Preferably, the system user has the authority to change any possible preference for each of these elements in the first module 31, by use of said first interface. Also, preferences for each of these elements may be kept enabled or disabled for any future requests.

According to embodiments of the invention, said first module 31 is further configured to anticipate the need of the system user for a transport service, by suggesting of its own motion to the system user to send out a request for a transport service. For this purpose, the first module 31 may use input relating to the time of day or the location of the system user. As a non-limiting example, the first module 31 may be configured to observe that at the end of a day at work, a system user seems to be leaving or preparing to leave his or her workplace, assume that the system user is returning home and conclude he or she might be interested in transport home.
The first module 31 of the first computing device 30 may be configured to alert the system user first by proposing to send such a request.
According to preferred embodiments, the first module 31 may be configured to formulate and emit such a request for a transport service of its own motion.

According to particular embodiments, said first module 31 is configured to suggest and/or initiate autonomously a request for a transport service by use of machine learning techniques and/or pattern recognition models.

For the purpose of the invention, the term "machine learning" refers to an application of artificial intelligence that provides systems with the ability to automatically learn and improve from experience without being explicitly programmed thereto. Based on observations and/or data, such as examples, direct experience, or instruction, machine learning techniques look for patterns in data and make better decisions in the future based on the examples provided.

Said machine learning approaches may include, but are not limited to, supervised or unsupervised analysis: classification techniques (e.g. naive Bayes, Linear Discriminant Analysis, Quadratic Discriminant Analysis Neural Nets, Tree based approaches, Support Vector Machines, Nearest Neighbour Approaches), Regression techniques (e.g. linear Regression, Multiple Regression, logistic regression, probit regression, ordinal logistic regression ordinal probit regression, Poisson Regression, negative binomial Regression, multinomial logistic Regression, truncated regression), Clustering techniques (e.g. k-means clustering, hierarchical clustering, PCA), Adaptations, extensions, and combinations of the previously mentioned approaches.

Upon confirmation of the decision to send out a request for a transport service, said decision being taken by the system user or by the first module 31, said request is subsequently translated to a request signal containing the necessary information allowing vehicles of said plurality 20 to react to the request. The first computing device 30 will emit said request signal containing the necessary information to a selected set of autonomous vehicles.

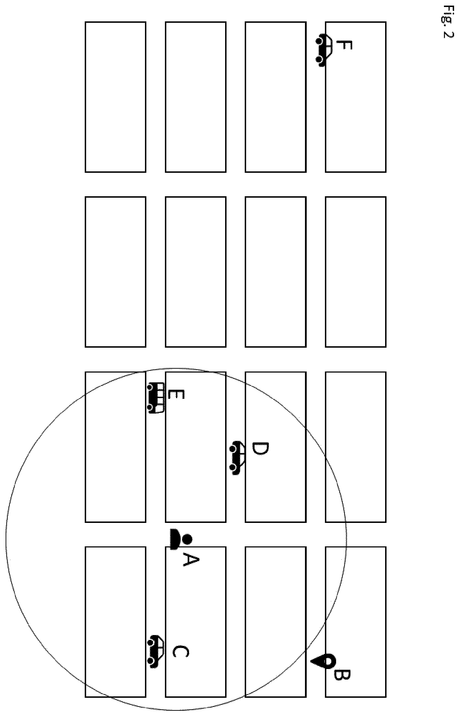

According to embodiments of the invention, the request signal will only be sent to a selection of vehicles of the plurality of autonomous vehicles 20. Such a selection will typically be based on a set of parameters, which may include the location of the system user, the pick-up location, the destination location in the request, the proximity of the vehicles with regard to said locations, and the available range of the vehicle. As a consequence, only a set of autonomous vehicles, forming a part of said plurality of autonomous vehicles 20, will receive the request. The creation of said set of autonomous vehicles is consequently determined on the basis of geographical proximity of a vehicle to a certain location. Referring to Fig. 2, system user A may request a transport service to destination location B. However, due to their geographical proximity, as emphasized by the circle around system user A, the request signal will only be sent to vehicles C-E, as vehicle F is being considered too far away for this task.
Alternatively, all vehicles of the plurality 20 receive the request signal. However, vehicles not corresponding to the above-mentioned set of parameters, may decide to ignore such non-essential request signals.

According to embodiments of the invention, each of said plurality of autonomous vehicles 20 is provided with a second computing device 40. Said device 40 may be pre-installed in a new vehicle of any type or any brand but may also be installed in used vehicles of any type, brand or age, as long as the vehicle disposes of the required level of automation.
Advantageously, the independency of the second computing device 40 with respect to the type, brand or age of the vehicles has as a consequence that the system may also be applied to used vehicles. As such, the vehicle may become part of the system 1 after the sale of the vehicle by the original equipment manufacturer (OEM) to a customer.

A vehicle of said plurality of autonomous vehicles 20 may use said second computing device 40 for receiving from a first computing device 30, a request by one of a plurality of system users and goods 10, in the form of a request signal, for a transport service to a destination location.

Said second computing device 40 is further provided to operate a third module 41.
Said third module 41 is configured to inspect said received request signal taking into account a predetermined set of elementary rules with the aim of formulating a bid to said request in the form of a transport service offer, or to refuse said request, in case no arrangement can be found with respect to said predetermined elementary rules and/or any elements defined in said request.

Said set of elementary rules is thus defined to evaluate the particularities of the system user's request (e.g. the request implies multiple passengers and therefore requires a certain number of seats) if an arrangement can be found with respect to the features of the vehicle (e.g. number of seats available in the vehicle), while taking general conditions such as traffic and weather into account. As such, said set of elementary rules may refer to at least one or more of the following:
- a minimum price requested for the service by the vehicle;
- the time the vehicle may need to arrive at the requested pick-up location, given the state of current and expected traffic;
- the effect on average travel time for all passengers of the vehicle due to interference of the request, defined by a pick-up location, a destination location and possibly one or more requested stopovers, with already ongoing, parallel transport services for other system users;
- the number of available passenger seats and/or available storage room;
- local weather conditions, such as the occurrence of rain, snow, fog, slipperiness of the road, wind speed and wind direction, and the like;
- immediate as well as expected traffic for the requested and ongoing transport services;
- presence of any vehicle facilities, as explained here above;
- a minimum user rating requested for the vehicle;
- the range of the vehicle, being the capacity of the vehicle to handle any transport services, as well as the effect of the requested transport service on said range;
- effect of geography of the possible itineraries on the range of the vehicle.

Based on the application of said set of elementary rules, said third module 41 may decide to turn down the request for a transport service, or to respond to the request by proposing a transport service offer. Such a decision is taken on an autonomous basis by the third module 41, meaning that no interference with a centralized party, such as a central server, is needed.

According to particular embodiments, said third module 41 is thereby configured to formulate autonomously a pricing for said transport service. Preferably, the decision to formulate a transport service offer as well as the pricing for such an offer are done on the basis of machine learning techniques.
It has been found that said techniques may advantageously be used to adapt offers and pricing in view of an ever-changing market, due to e.g. changes in supply and demand, location of the required service (prices will be higher when remote locations are involved, serving less potential customers), time of day (offers will have higher prices during peak hour), and the like. As such, said techniques may be used to increase profits for individual vehicles of said plurality 20 by supporting the preparation of a bid for a transport service that maximizes the probability of the client accepting said bid.

Said third module 41 is further configured to translate the decision being a refusal or a transport service offer to an answer signal, and to communicate said answer signal comprising said refusal or said transport service offer to said particular first computing device 30.
Said answer signal is sent within a third predetermined time frame t₃, said time frame t₃ starting from the receival of the request signal. It will be clear from the above that the duration of t₃ is shorter than the duration of t₁, so that an answer signal communicated by the third module 41 to the first computing device 30 within the duration t₃, will arrive in time at said device 30 in order to be evaluated.

According to embodiments of the invention, said third module 41 which is part of a first vehicle of said plurality of autonomous vehicles 20 is configured to contact a second computing device 40 of a second vehicle of said plurality of autonomous vehicles 20 and propose to said second vehicle to share said transport service. Such a proposal will typically involve a meeting location for the two vehicles to meet and transfer said system user from the first to the second vehicle of said plurality 20. Consequently, said first vehicle may propose the system user with a transport service offer comprising a shared service, wherein said service offer is communicated to the first computing device 30 of the system user within said predetermined time frame t₃.

According to embodiments of the invention, under the condition that said answer signal comprises a transport service offer, said second computing device 40 will then await a confirmation signal from said first computing device 30 for the duration of a fourth predetermined time frame t₄ starting from the communication of said particular answer signal.
Said fourth predetermined time frame t₄ is related to the time the transport service offer remains valid and may be communicated to the system user. During the duration of said time frame t₄, no requests for transport services from other system users will be accepted. More in particular, after communicating an answer signal comprising an offer, and for a duration t₄, no other answer signals comprising a transport service offer will be emitted in reply to request signals received from other first computing devices 30.
The fourth time frame t₄ is chosen such as to guarantee a system user enough time to select a convenient transport service offer. Typically, t₄ will be at least 20 seconds, preferably at least 30 seconds, more preferably at least 40 seconds, even more preferably at least 50 seconds and most preferably at least 60 seconds. It is further understood that t4 will be at most 10 minutes, preferably at most 8 minutes, more preferably at most 6 minutes and most preferably at most 4 minutes.

According to embodiments of the invention, said first computing device 30 is further configured to operate a second module 32, which second module 32 is being operated at the expiry of said first predetermined time frame t₁.

Said second module 32 is furthermore configured to analyse any answer signal which was received from at least one of said set of autonomous vehicles to which the request signal was sent, and which answer signal was received within said first time frame t₁.

From the analysis by the second module 32, the following two options may appear:
- none of the received answer signals comprise a transport service offer; the system user may have to adapt some of the elements contained in the previous request in order to enlarge the choice of available vehicles of said plurality 20; or
- at least one answer signal received within said time frame t₁ contains a transport service offer.

According to embodiments of the invention, said at least one transport service offer can be presented by the second module 32 to the system user, wherein said system user can actively select his or her choice for a particular transport service, wherein both actions are preferably performed by use of said first interface.
According to alternative embodiments, said at least one transport service offer can be selected by the second module 32 on an autonomous basis.
According to particular embodiments, the second module 32 can make such a selection autonomously by use of machine learning techniques and/or pattern recognition models.

Upon confirmation of a selection decision, said decision being taken by the system user or by the second module 32, a confirmation signal for delivering said transport service is sent to the autonomous vehicle from the set of autonomous vehicles, whose transport service offer was selected. According to embodiments, a rejection signal may be sent simultaneously to other vehicles of said set of autonomous vehicles, having also submitted transport service offers.
The system user or second module 32 being aware of the time the transport service offer is valid, said confirmation signal will have to be sent in time so that the second computing device 40 of the selected vehicle receives the confirmation signal within the time frame t₄.

However, if the system user or second module 32 decides to reject all transport service offers, the second module 32 may decide to emit a rejection signal to said at least one of said set of autonomous vehicles.

According to embodiments of the invention, said confirmation signal or said rejection signal are communicated to the second computing device 40 within a second predetermined time frame t₂, starting from operating said second module 32. It will be clear from the above that the duration of t₂ is shorter than the duration of t₄, so that any confirmation signal or rejection signal communicated by the second module 32 to the second computing device 40 within the duration t₂, will arrive in time at said device 40.

Communication between the first computing device 30 of one said plurality of system users and goods 10 and the second computing device 40 of one of said plurality of autonomous vehicles 20 can be conducted by use of data transfer protocols known in the state of the art. More in particular, system standards such as 4G, WiMAX (IEEE Std 802.16m) or 5G can be used for such communication. Preferably, the Transport Protocol Expert Group data protocol TPEG2 (ISO/TS 21219) is used, which protocol may use internet or digital broadcasting as transmission medium.

The invention can be applied to vehicles independently of the propulsion technology used. As such, the vehicles of said plurality of autonomous vehicles 20 may be propelled by a diversity of propulsion technologies, such as an internal combustion engine, fuelled by e.g. gasoline, diesel or CNG. Said vehicles may be hybrid vehicles, plug-in electric vehicles, or vehicles fuelled by hydrogen. The vehicle may be fuelled by a combination of the technologies mentioned.
As such, the range of the vehicle will be determined by the quantity of gasoline, diesel or hydrogen left, or by the battery charge.

The present invention also pertains to a computer program, optionally stored on a computer-readable medium, comprising code means adapted to cause a processor to perform the functions of the first computing device 30 as described above.

According to embodiments of the present invention, said code means make thereby use of an application programming interface (API). Said API is used to allow interaction between software applications and to integrate different software applications.
More in particular, an API may be used to transfer data contained in software program A to another environment under the control of a second processor which runs software program B and store said data in a second non-volatile memory.
According to embodiments of the invention, said API may be used to exchange signals between the first computing device 30 and proprietary software of a transport company offering transport services by use of a plurality of autonomous vehicles.

The present invention further pertains to a computer program, optionally stored on a computer-readable medium, comprising code means adapted to cause a processor to perform the functions of the second computing device 40 as described above.

According to embodiments of the present invention, said code means make thereby use of an API. According to embodiments of the invention, said API may be used to exchange signals between the second computing device 40 and proprietary software of a transport company offering transport services by use of a plurality of autonomous vehicles.

By use of such an API, vehicles of said plurality of autonomous vehicles 20 can advantageously offer its transport services via the intermediary of companies offering transport services using autonomous vehicles, while keeping a high degree of autonomy at the same time, as explained here above. More in particular, even when using such a company as intermediary, the vehicle can freely choose to participate in a bid for a transport service and set its price.

While the invention has been described hereinabove with reference to specific embodiments, this is done to illustrate and not to limit the invention, the scope of which is defined by the accompanying claims. The skilled person will readily appreciate that different combinations of features than those described herein are possible without departing from the scope of the claimed invention.

## Claims

1. A method of using a first computing device (30) in a system (1) for transporting a plurality of system users and goods (10) by use of a plurality of autonomous vehicles (20), the method comprising at said first computing device (30):
- Operating a first module (31) to receive, by use of a first interface, from one of said plurality of system users and goods (10), a request for a transport service performed by at least one of said plurality of autonomous vehicles (20) to a destination location;
- Emitting a request signal comprising said request to a set of autonomous vehicles of said plurality of autonomous vehicles (20);
- Operating a second module (32), at the expiry of a first predetermined time frame t₁, starting from emitting said request signal, to
∘ analyse any answer signal received from at least one of said set of autonomous vehicles within said first time frame t₁;
and, if from said analysis emerges that said any answer signal comprises a transport service offer, to
∘ select a transport service proposed by one of said set of autonomous vehicles; and to
∘ emit a confirmation signal to said autonomous vehicle selected for delivering said transport service.

2. The method according to claim 1, wherein said first interface is configured to receive a request for a transport service by use of a mobile device screen, and/or wherein said first interface is further configured to display at least the selected transport service, by use of said mobile device screen.

3. The method according to claim 1 or claim 2, wherein the creation of said set of autonomous vehicles is determined on the basis of geographical proximity of vehicles to a certain location, such as the location of one of said plurality of system users and goods (10).

4. The method according to any one of previous claims, wherein said first module (31) is configured to suggest and/or initiate autonomously a request for a transport service by use of machine learning techniques.

5. The method according to any one of previous claims, wherein said second module (32) is configured to select autonomously a transport service proposed by at least one of said set of autonomous vehicles by use of machine learning techniques.

6. The method according to any one of previous claims, wherein said second module (32) further emits a rejection signal to any vehicle of said at least one of said set of autonomous vehicles, under the condition that said any vehicle was not selected for delivering said transport service.

7. The method according to claim 6, wherein said confirmation signal or said rejection signal are emitted within a second predetermined time frame t₂, starting from operating said second module (32).

8. A method of using a second computing device (40) in a system (1) for transporting a plurality of system users and goods (10) by use of a plurality of autonomous vehicles (20), the method comprising at said second computing device (40):
- Receiving, from a first computing device (30), a request signal relating to a request for a transport service to a destination location;
- Operating a third module (41) to
∘ inspect said request signal on the basis of predetermined elementary rules with the aim of formulating a bid to said request in the form of a transport service offer, or to refuse said request;
∘ communicate to said particular first computing device (30) an answer signal comprising said refusal or said transport service offer, within a third predetermined time frame t₃ starting from the receival of said particular request signal;
and, if said answer signal comprises a transport service offer,
- awaiting a confirmation signal for the duration of a fourth predetermined time frame t₄ starting from the communication of said particular answer signal.

9. The method according to claim 8, wherein, under the condition that an answer signal has been sent comprising a transport service offer, and for the duration of said fourth predetermined time frame t₄, no answer signals comprising a transport service offer are emitted in reply to request signals received from other first computing devices (30).

10. The method according to claim 8 or claim 9, wherein said third module (41) is further configured to formulate said bid to said request, by use of machine learning techniques.

11. The method according to any one of claims 8-10, the method further comprising at said second computing device (40) the step of contacting one of a plurality of autonomous vehicles (20).

12. A system (1) for transporting a plurality of system users and goods (10) by use of a plurality of autonomous vehicles (20),
comprising one or more first computing devices (30) for use in the method according to any of the claims 1-7 and one or more second computing devices (40) for use in the method according to any of the claims 8-11.

13. The system according to claim 12, wherein said first and second computing devices are configured to communicate signals by use of the TPEG protocol.

14. A computer program product comprising code means configured to cause a processor to perform the functions of said first computing device (30) according to any one of claims 1-7.

15. A computer program product comprising code means configured to cause a processor to perform the functions of said second computing device (40) according to any one of claims 8-11.
